Europäisches Patentamt

European Patent Office

Office européen des brevets

(11) Veröffentlichungsnummer : **0 128 296**
**B1**

(12) **EUROPÄISCHE PATENTSCHRIFT**

(45) Veröffentlichungstag der Patentschrift :
**11.11.87**

(51) Int. Cl.⁴ : **G 01 G 23/18**

(21) Anmeldenummer : **84103935.7**

(22) Anmeldetag : **09.04.84**

(54) **Verfahren zur optischen Gewichtsdarstellung bei Dosiervorgängen sowie Dosierwaage zur Durchführung des Verfahrens.**

(30) Priorität : **10.06.83 CH 3196/83**

(43) Veröffentlichungstag der Anmeldung :
**19.12.84 Patentblatt 84/51**

(45) Bekanntmachung des Hinweises auf die Patenterteilung : **11.11.87 Patentblatt 87/46**

(84) Benannte Vertragsstaaten :
**DE FR GB IT NL SE**

(56) Entgegenhaltungen :
**CH-A- 629 893**
**DE-A- 2 702 842**
**DE-A- 2 923 215**
**DE-A- 3 017 484**

(73) Patentinhaber : **Mettler Instrumente AG**
**Im Langacher**
**CH-8606 Greifensee (CH)**

(72) Erfinder : **Baumann, Arthur**
**Hertistrasse 11**
**CH-8614 Bertschikon (CH)**

## Beschreibung

Die Erfindung betrifft Verfahren zur optischen Gewichtsdarstellung bei Dosiervorgängen, bei welchen einer Anzeigesteuerung ein Sollwert eingegeben und in einer Anzeige eine nicht-numerische Darstellung des Gewichts mit Hilfe von gewichtsabhängig angesteuerten, der Peripherie einer runden Fläche zugeordneten Anzeigeelementen erzeugt wird (Ansprüche 1, 2).

Die Erfindung betrifft ferner Dosierwaagen zur Durchführung solcher Verfahren (Ansprüche 5, 6).

Verfahren bzw. Waagen mit nicht-numerischer Gewichtsanzeige sind bereits verschiedentlich bekannt geworden. So beschreibt die deutsche Offenlegungsschrift 25 36 045 eine Waage, die neben einer üblichen numerischen Anzeige eine quasi-analoge Uebersichtsanzeige aufweist, welche einen Hinweis auf den noch verfügbaren bzw. den schon ausgenutzten Anteil des Wägebereichs gibt. Eine ähnliche Waage beschreibt die deutsche Patentschrift 26 04 747, gemäss welcher symbolhaft angeordnete Streifen von Leuchtelementen verwendet werden. Eine eigentliche Einwäge- oder Dosierhilfe ist mit diesen beiden Uebersichtsanzeigen allerdings nicht gegeben (allenfalls dann, wenn das Sollgewicht zufällig dem Wägebereich entspricht). ·

Die US-Patentschrift 4,200,896 offenbart eine 7-Segment-Anzeige, bei der zeitweise nur die Horizontalsegmente aktiviert werden. Die Digitalanzeige wird so zu einer Analoganzeige, welche es erlaubt, nur aus der Position der Horizontalsegmente beim Dosieren Hinweise auf die Annäherung an das Sollgewicht zu entnehmen. Diese Methode hat den Vorteil, dass eine separate (zusätzliche) Uebersichtsanzeige entbehrlich ist. Nachteilig ist jedoch, dass die jeweiligen Anzeigeänderungen streng dekadisch gestuft sind und insofern eine gewisse Starrheit der Anzeigesprünge bedingen. Ferner bedarf es einer längeren Eingewöhnung und hoher Konzentration seitens der Bedienungsperson, um den Dosiervorgang an die logarithmische Anzeigewechselcharakteristik anzupassen. Diese Bemerkungen gelten auch für eine weitere bekannte Methode (deutsche Offenlegungsschrift 27 02 842), bei welcher ebenfalls eine starr dekadische Stufung vorgesehen ist, wobei wiederum zusätzlich zur numerischen Anzeige eine Analoganzeige aus Leuchtelementen verwendet wird.

Schliesslich ist eine Uebersichtsanzeige der eingangs genannten Art bekannt geworden (deutsche Offenlegungsschrift 29 23 215), bei der zwei konzentrische Kreise mit einer Vielzahl von punktförmigen Leuchtelementen (z. B. Leuchtdioden) versehen sind. Jedem Kreis sind eigene Gewichtsdezimalen oder -dezimalengruppen zugeordnet, und die Leuchtdioden werden gewichtsabhängig angesteuert, wobei sich das Istgewicht durch Abzählen der bereits aktivierten Leuchtdioden ergibt. Der Aufwand an Anzeigeelementen ist dabei erheblich, und zur Ablesung des jeweiligen Istgewichtes müssen mehrere verschiedene Dezimalstellen (gruppen) symbolisierende Anzeigeelemente erfasst werden.

Die vorliegende Erfindung entstand aus der Aufgabenstellung, mit geringerem Aufwand an Anzeigeelementen eine wesentlich verbesserte, eindeutige optische Führung der Bedienungsperson bei Dosiervorgängen (meist Zudosieren, aber auch gelegentlich Wegdosieren, d. h. Entnahme von Wägegut) zu ermöglichen.

Zur Lösung dieser Aufgabe wird ein Verfahren der eingangs erwähnten Art vorgeschlagen, bei welchem als Anzeigeelement ein wandernder Zeiger ähnlich einem Uhrzeiger dient, wobei eine auf die Dosierrate bezogene erste Umlaufgeschwindigkeit während des Grobdosierens und eine zweite, grössere Umlaufgeschwindigkeit während des Feindosierens verwendet wird.

Bei einer Alternativlösung dienen als Anzeigeelemente zwei wandernde Zeiger ähnlich Uhrzeigern, wobei sich der eine Zeiger (Grobzeiger) mit einer auf die Dosierrate bezogenen ersten Umlaufgeschwindigkeit und der andere Zeiger (Feinzeiger) erst gegen Ende des Dosiervorgangs und mit einer zweiten Umlaufgeschwindigkeit bewegt. Es wird also in beiden Fällen die Anzeigeempfindlichkeit verändert, wobei der Gewichtsbereich nahe dem Sollwert gespreizt wird, und der Wägende kann so während einer ersten Phase rasch, nahe dem Sollwert dagegen langsam dosieren. Die Art der analogen Abbildung des Dosiervorgangs erlaubt ihm dabei eine maximale Zeitausnutzung und führt so zu einem merklichen Zeitgewinn ohne Erhöhung des Ueberfüllungsrisikos, wobei die bildliche Darstellung in Form einer Zeigerbewegung das Erfassen des jeweiligen Standes der Dosieroperation wesentlich erleichtert.

Eine Möglichkeit, die erstgenannte Variante auszugestalten, besteht darin, den einzigen Zeiger so zu verwenden, dass er beispielsweise während des Grobdosierens langsam einen ersten Sektor (z. B. einen Quadranten) und während des Feindosierens schneller einen zweiten Sektor (z. B. die beiden folgenden Quadranten) überstreicht. Diese Variante hätte den Vorteil, dass die Bedienungsperson insgesamt nur einen einzigen Zeiger beachten müsste, und den Nachteil, dass (wenn man einen Mehrfachumlauf vermeiden will) für den Gesamtweg während einer Dosierung höchstens ein voller Kreis zur Verfügung steht.

Bei der zweiten Variante überstreichen vorzugsweise beide Zeiger unabhängig vom Sollwert während eines vollständigen Dosiervorgangs je einen vorbestimmten Kreissektor. Damit kann sich die Bedienungsperson unabhängig vom jeweiligen Sollwert stets an denselben Positionen der Zeiger orientieren. Zweckmässigerweise gehen dabei die beiden Zeiger von derselben Startposition aus und durchlaufen nacheinander je einen gleich grossen Sektor.

Aehnlich dem Stunden- und Minutenzeiger können beide Zeiger dabei in derselben Richtung wandern. Es wäre aber auch denkbar, dass sie sich gegenläufig bewegen.

Zweckmässig kann es ferner sein, wenn das Sollgewicht in der regelmässig zusätzlich vorhandenen Digitalanzeige numerisch zur Anzeige bringbar ist ; damit hat die Bedienungsperson z. B. eine Kontrollmöglichkeit, welche von mehreren Komponenten gerade dosiert wird.

Eine Dosierwaage zur Durchführung der erstgenannten Variante des erfindungsgemässen Verfahrens, mit einer Anzeige, welche der Peripherie einer runden Fläche zugeordnete Anzeigeelemente zur nicht-numerischen Darstellung des Gewichts umfasst, mit einer Anzeigesteuerung, und mit einer Einrichtung zur Eingabe eines Sollwertes in die Anzeigesteuerung, ist dadurch gekennzeichnet, dass als Anzeigeelement ein wandernder Zeiger ähnlich einem Uhrzeiger dient, und dass eine Schaltung vorgesehen ist, welche zur Erzeugung von zwei auf die Dosierrate bezogenen verschiedenen Zeigerumlaufgeschwindigkeiten während eines vollständigen Dosiervorgangs dient.

Zur Durchführung der zweiten Variante des Verfahrens dient eine Dosierwaage, mit einer Anzeige, welche der Peripherie einer runden Fläche zugeordnete Anzeigeelemente zur nicht-numerischen Darstellung des Gewichts umfasst, mit einer Anzeigesteuerung und mit einer Einrichtung zur Eingabe eines Sollwertes in die Anzeigesteuerung, die dadurch gekennzeichnet ist, dass als Anzeigeelemente zwei wandernde Zeiger ähnlich Uhrzeigern dienen, und dass eine Schaltung vorgesehen ist, welche zur Erzeugung einer auf die Dosierrate bezogenen ersten Umlaufgeschwindigkeit für den einen Zeiger (Grobzeiger) und einer zweiten Umlaufgeschwindigkeit für den anderen Zeiger (Feinzeiger) dient, dergestalt, dass der Feinzeiger nur gegen Ende des Dosiervorgangs wandert.

In einer vorteilhaften Ausgestaltung ähnelt dabei der Grobzeiger einem Stundenzeiger und der Feinzeiger ist als nahe der Peripherie wandernder Teil eines Minutenzeigers ausgebildet. Damit wird die Tatsache ausgenützt, dass der überstrichene Weg an der Peripherie am längsten ist und daher die grösste Auflösung ermöglicht.

Für manche Anwendungsfälle ist die Anzeige eines Toleranzbereichs erwünscht, wenn nämlich beispielsweise Dosierungen von Sollgewicht plus/minus 1 ‰ als « gut » gelten, aber auch, um das Mass einer etwaigen Unter- oder Ueberfüllung abzuschätzen. Zweckmässigerweise sind daher der Anzeige optische Markierungen zur Kennzeichnung eines Toleranzbereichs zugeordnet.

Nachstehend wird anhand der Zeichnungen ein Ausführungsbeispiel der Erfindung beschrieben. In den Zeichnungen ist

Figur 1 eine blockschematische Darstellung der Gesamtanordnung mit vergrösserter Anzeige,

Figur 2, 3 und 4 je ein Detail zu Figur 1,

Figur 5 ein Diagramm der Zeigerwege abhängig vom Gewicht, und

Figur 6 ein Flussdiagramm der wesentlichen Verfahrensschritte.

Eine Waage oder Messzelle 10 liefert ein Signal, das in einem Messwertgeber 12 in ein digitales gewichtsproportionales Signal (Mess- oder Gewichtswert G) umgeformt wird. Dieses signal G wird in einem Mikrocomputer weiterverarbeitet. Letzterer umfasst in bekannter Weise im wesentlichen eine zentrale Recheneinheit (CPU) 14, einen Arbeitsspeicher (RAM) 16 und einen Festwertspeicher (ROM) 18. Nachgeschaltet ist eine Anzeigespeicher- und -treiberschaltung 20, ebenfalls für sich konventionell, welche eine Digitalanzeige 22 und eine Analoganzeige 24 steuert. Letztere umfasst im wesentlichen eine Kreisfläche 26, einen vom Zentrum sich radial bis etwa 2/3 der vollen Radiuslänge erstreckenden ersten Zeiger 28 (Grobzeiger) sowie einen ebenfalls radial gerichteten zweiten Zeiger 30 (Feinzeiger), der sich über knapp 1/3 der Radiuslänge erstreckt und nahe der Peripherie endet. An der stelle « 12 Uhr » ist eine Marke 32 angebracht, in gleichen (oder auch ungleichen) Abständen rechts und links davon je eine Marke « + » bzw. « — ».

Ferner ist eine Tastatur 34 vorgesehen, mit deren Hilfe auf übliche Weise numerische Werte sowie Steuerbefehle eingegeben werden können.

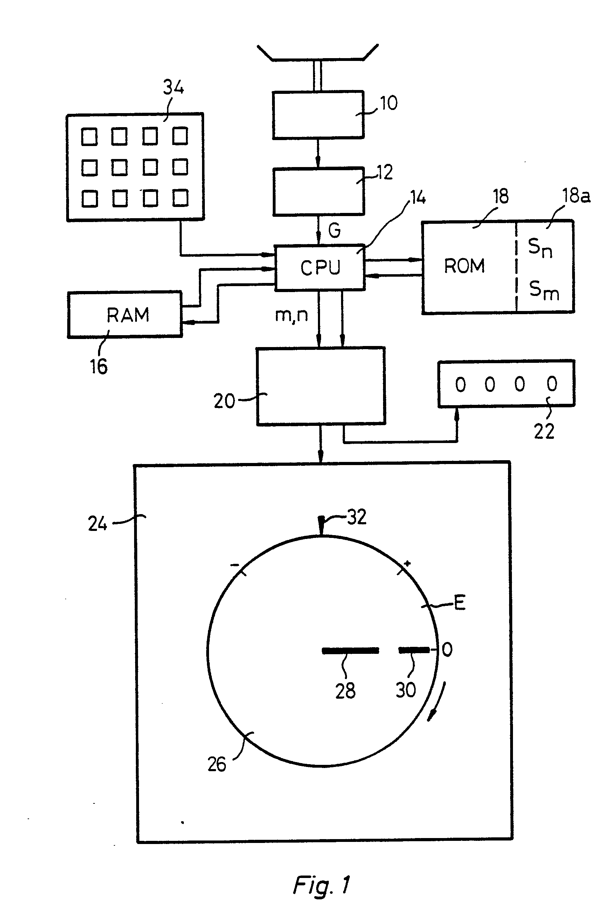

Bei unbelasteter Waage 10 bzw. nach dem Nullstellen oder dem Tarieren eines Behälters nehmen Grob- und Feinzeiger (28 bzw. 30) die aus Figur 1 ersichtliche Stellung ein (Nullposition).

Wird nun Wägegut zugegeben, so wandert der Grobzeiger 28 langsam in Pfeilrichtung, bis er, bei etwa 90 % des Sollgewichts, eine Position etwa « 5 Minuten vor 12 Uhr » erreicht hat (Grobdosierphase). Jetzt setzt sich der Feinzeiger 30 in Bewegung und wandert mit bezogen auf die Gewichtszunahme etwa der neunfachen Geschwindigkeit des Grobzeigers ebenfalls in Pfeilrichtung (Feindosierphase).

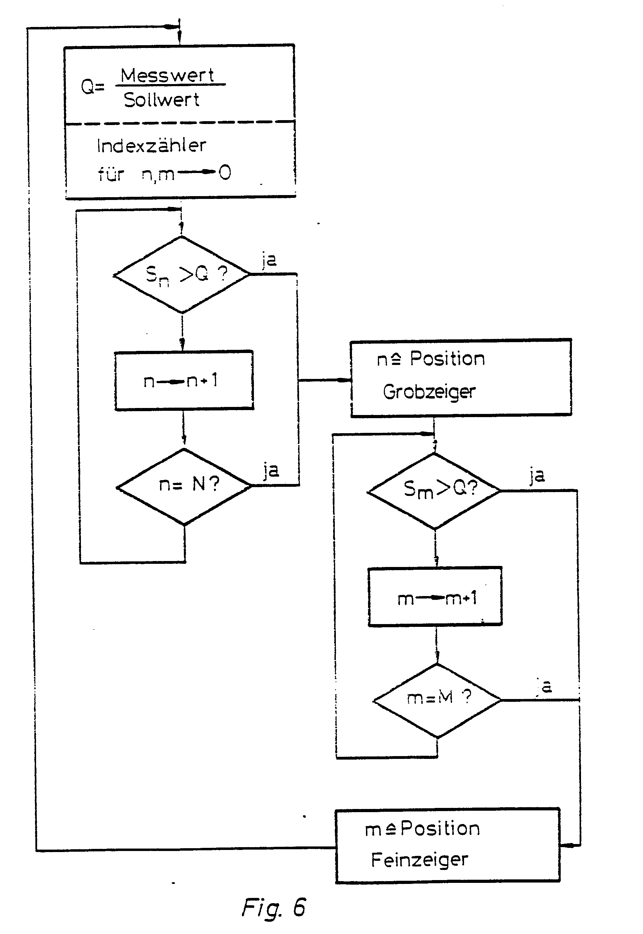

Ist der Sollwert erreicht, so stehen beide Zeiger 28, 30 bei « 12 Uhr » in einer Flucht. Beide Zeiger haben nun drei Quadranten durchlaufen. Die Figuren 2 bis 4 veranschaulichen den Ablauf :

In Figur 2 ist die Grobdosierphase zu etwa 3/4 vorbei. Der Feinzeiger verharrt noch am Ausgangspunkt (Nullposition).

In Figur 3 ist die Grobdosierphase beendet, und der Feinzeiger 30 hat knapp die Hälfte seines Weges zurückgelegt.

In Figur 4 ist der Sollwert (genau) erreicht : Beide Zeiger sind in der Sollwertposition, an der Sollwertmarke 32, der Dosiervorgang ist abgeschlossen.

Bei weiterer Zugabe von Wägegut werden beide Zeiger 28, 30 mit ihren verschiedenen Geschwindigkeiten in Pfeilrichtung weiterwandern. Dabei erscheint es zweckmässig, eine Endstellung (hier bei « 2 Uhr ») festzulegen, die auch bei weiterer Gewichtszunahme nicht mehr verlassen wird und vor der Ausgangs- oder Nullposition liegt, um eine Verwechslung mit einer Gewichtsangabe unterhalb des Sollwertes auszuschliessen. Dabei kann der Ueberbereich (hier : zwischen « 12 Uhr » und « 2 Uhr » zusätzlich optisch markiert werden, beispielsweise durch Aktivieren weiterer Anzeigeelemente in diesem Bereich.

In der Praxis wird häufig eine kleine Toleranz auf den Sollwert zugestanden, um das Einwägen zu erleichtern. Die Position der Marken « + » bzw. « — » in Figur 1 begrenzt beispielhaft einen solchen Toleranzbereich, wobei die Position des Feinzeigers 30 massgebend ist.

Ist im Anschluss an die (erste) Dosierung eine weitere Komponente einzuwägen, so wird in bekannter Weise tariert, worauf Grob- und Feinzeiger simultan zur Nullstellung der numerischen Anzeige 22 in ihre Ausgangsposition bei « 3 Uhr » zurückgesetzt werden. Nun kann ein neuer Sollwert eingetastet werden und die nächste Einwägung (Dosierung) beginnen.

Figur 5 zeigt ein Schaubild des Dosierverlaufs. Zur Erläuterung wird auf die klassische Minutenteilung der Analoguhr zurückgegriffen :

Während der Grobdosierphase durchläuft der Grobzeiger 28 einen Weg von 40 « Minuten », was einem Dosiergrad von ca. 90 % entspricht. Sodann setzt sich der Feinzeiger 30 in Bewegung. Er durchläuft während der Feindosierphase (ca. 10 % des Sollwertes) einen Weg von 45 « Minuten », während der Grobzeiger weitere 5 « Minuten » durchläuft, bis der Sollwert S erreicht ist. Das Schaubild zeigt auch den Ueberbereich (gestrichelte Andeutung der Positionen n des Grobzeigers 28 bzw. m des Feinzeigers 30). Der Ueberbereich erstreckt sich über 10 « Minuten », d. h. die Endlage E beider Zeiger ist 5 « Minuten » oberhalb der Nullposition der Zeiger. Die Bedeutung der Abszissenangaben ($S_n$, $S_m$) ergibt sich aus den folgenden Ausführungen zur Steuerung der Dosieranzeige in Verbindung mit dem Flussdiagramm der Figur 6.

Zu Beginn einer Dosierung wird mittels der Tastatur 34 der Sollwert (das Soll- oder Dosiergewicht) eingegeben und im Arbeitsspeicher 16 gespeichert. Dieser Sollwert kann im Bedarfsfall durch Betätigen einer Taste in der Tastatur 34 jederzeit kontrollhalber abgerufen werden und erscheint dann in der Digitalanzeige 22.

Im Festwertspeicher 18 sind zwei Tabellen mit Schwellwerten $S_0$ ... $S_{54}$ sowohl für den Grobzeiger 28 ($S_n$) als auch für den Feinzeiger 30 ($S_m$) enthalten (Speicherteil 18a). Bei jedem durch den Takt des Mikrocomputers vorgegebenen Zyklus geschieht folgendes :

Der aktuelle Gewichtswert (Messwert) G des Nettogewichts wird eingelesen.

Zwei Indexzähler werden auf Null gesetzt (n für den Grobzeiger, m für den Feinzeiger).

Der Quotient Messwert/Sollwert wird gebildet und mit den gespeicherten Schwellwerten (erst mit $S_n$ und dann mit $S_m$) verglichen. Dabei wird jeweils der betreffende Indexzähler für n bzw. m so oft um einen Schritt weiter laufen, bis entweder der Speicherwert ($S_n$, $S_m$) grösser als Q ist (vor dem Erreichen des Ueberbereichs-Grenzwertes E, vgl. Figur 1), oder aber der letzte Tabellenwert ($S_n$ bzw. $S_m$) gleich oder kleiner wird als es der Grenzlage der Zeiger bei E entspricht (N bzw. M).

Die Recheneinheit 14 steuert die Anzeigespeicher- und -treiberschaltung 20 so an, dass — neben der normalen numerischen Anzeige (22) des aktuellen Gewichtswertes — die den jeweils zutreffenden Speicherwerten $S_n$ bzw. $S_m$ entsprechenden Stellungen von Grob- und Feinzeiger 28 bzw. 30 in der Analoganzeige 24 aktiviert, d. h. angezeigt werden.

Wie das Schaubild der Figur 5 zeigt, ist der Zusammenhang zwischen dem Zeigerweg und der prozentualen Gewichtszunahme linear (in manchen Fällen mögen auch andere Zusammenhänge zweckmässig sein). Zur Verdeutlichung ist den in Figur 5 beispielhaft angegebenen Tabellenwerten $S_n$, $S_m$ als Index jeweils der « Minutenwert » der entsprechenden Zeigerposition zugeordnet (so steht z. B. $S_{40}$ für den Grobzeiger für dessen Position « 5 Minuten vor 12 Uhr ».

Die konstruktive Realisierung der Analoganzeige 24 kann auf mehrere konventionelle Arten, mit aktiven oder passiven Anzeigetypen, erfolgen. Als Beispiele seien genannt

eine Fluoreszenzanzeige mit z. B. je 60 strahlenbzw. radiusartig hinter der Kreisfläche 26 angeordneten, selektiv ansteuerbaren Leuchtsegmenten für den Grob- und den Feinzeiger ;

eine Flüssigkristallanzeige mit entsprechenden aufgedampften Elektroden.

Die Art der verwendeten Waage oder Messzelle ist irrelevant, sofern das Gewichtssignal nur in digitaler Form zur Verfügung steht.

Verschiedene Variationen und Ergänzungen des hier an einem Beispiel vorgestellten Prinzips sind denkbar. So kann ein akustisches Signal die Bedienungsperson aufmerksam machen, wenn die Feindosierphase beginnt. Die numerische Anzeige könnte in die Analoganzeige integriert werden (evt. innerhalb, eher aber ausserhalb der Kreisfläche 26). Die Zeiger könnten auch in einer anderen als kreisförmigen Anzeigefläche (z. B. einer elliptischen) wandern. In Sonderfällen mag auch eine Aufteilung in drei Phasen (Grob-, Mittel- und Feindosierphase) mit drei Zeigern, aber auch mit nur einem Zeiger mit drei Geschwindigkeiten, sinnvoll sein. Auch für die Wahl der jeweils überstrichenen (Kreis-)Sektoren sind unterschiedliche Varianten möglich, ebenso für die Gestaltung der Zeiger (z. B. beide Zeiger gleich lang). Eine weitere Variable ist der Bereich, während dessen beide Zeiger sich bewegen (im Beispiel : von « 5 vor 12 » bis « 12 Uhr », bezogen auf den Grobzeiger). Dieser Bereich kann sogar Null sein, d. h. der Grobzeiger kommt in seiner Sollwertstellung zur Ruhe, und erst dann beginnt der Feinzeiger zu wandern.

Schliesslich könnte auch der Wechsel von der Grob- zur Feindosierphase variabel sein, also z. B. bei 80 oder 95 % gewählt werden können, wozu ein Einstellelement vorgesehen werden könnte (z. B. eine Steuertaste) plus Eingabe des gewünschten Prozentsatzes auf der Tastatur. Dies würde allerdings einen grösseren Aufwand bei der Programmierung des Microcomputers bedingen.

## Patentansprüche

1. Verfahren zur optischen Gewichtsdarstellung bei Dosiervorgängen, bei welchem einer Anzeigesteuerung (14 ... 20) ein Sollwert eingegeben und in einer Anzeige (24) eine nicht-numerische Darstellung des Gewichts mit Hilfe von gewichtsabhängig angesteuerten, der Peripherie einer runden Fläche zugeordneten Anzeigeelementen (28, 30) erzeugt wird, dadurch gekennzeichnet, dass als Anzeigeelement ein wandernder Zeiger ähnlich einem Uhrzeiger dient, wobei eine auf die Dosierrate bezogene erste Umlaufgeschwindigkeit während des Grobdosierens und eine zweite, grössere Umlaufgeschwindigkeit während des Feindosierens verwendet wird.

2. Verfahren zur optischen Gewichtsdarstellung bei Dosiervorgängen, bei welchem einer Anzeigesteuerung (14 ... 20) ein Sollwert eingegeben und in einer Anzeige (24) eine nicht-numerische Darstellung des Gewichts mit Hilfe von gewichtsabhängig angesteuerten, der Peripherie einer runden Fläche zugeordneten Anzeigeelementen (28, 30) erzeugt wird, dadurch gekennzeichnet, dass als Anzeigeelemente zwei wandernde Zeiger (28, 30) ähnlich Uhrzeigern dienen, wobei sich der eine Zeiger (Grobzeiger) (28) mit einer auf die Dosierrate bezogenen ersten Umlaufgeschwindigkeit und der andere Zeiger (Feinzeiger) (30) erst gegen Ende des Dosiervorgangs und mit einer zweiten Umlaufgeschwindigkeit bewegt.

3. Verfahren nach Anspruch 2, dadurch gekennzeichnet, dass beide Zeiger (28, 30) unabhängig vom Sollwert während eines vollständigen Dosiervorgangs je einen vorbestimmten Kreissektor überstreichen.

4. Verfahren nach Anspruch 3, dadurch gekennzeichnet, dass die beiden Zeiger (28, 30) von derselben Startposition (0) ausgehen und nacheinander je einen gleich grossen Sektor durchlaufen.

5. Dosierwaage, mit einer Anzeige (24), welche der Peripherie einer runden Fläche (26) zugeordnete Anzeigeelemente (28, 30) zur nicht-numerischen Darstellung des Gewichts umfasst, mit einer Anzeigesteuerung (14 ... 20), und mit einer Einrichtung (34) zur Eingabe eines Sollwertes in die Anzeigesteuerung, dadurch gekennzeichnet, dass als Anzeigeelement ein wandernder Zeiger ähnlich einem Uhrzeiger dient, und dass eine Schaltung (14 ... 20) vorgesehen ist, welche zur Erzeugung von zwei auf die Dosierrate bezogenen verschiedenen Zeigerumlaufgeschwindigkeiten während eines vollständigen Dosiervorgangs dient.

6. Dosierwaage, mit einer Anzeige (24), welche der Peripherie einer runden Fläche (26) zugeordnete Anzeigeelemente (28, 30) zur nicht-numerischen Darstellung des Gewichts umfasst, mit einer Anzeigesteuerung (14 ... 20) und mit einer Einrichtung (34) zur Eingabe eines Sollwertes in die Anzeigesteuerung, dadurch gekennzeichnet, dass als Anzeigeelemente zwei wandernde Zeiger (28, 30) ähnlich Uhrzeigern dienen, und dass eine Schaltung (14 ... 20) vorgesehen ist, welche zur Erzeugung einer auf die Dosierrate bezogenen ersten Umlaufgeschwindigkeit für den einen Zeiger (28) (Grobzeiger) und einer zweiten Umlaufgeschwindigkeit für den anderen Zeiger (30) (Feinzeiger) dient, dergestalt, dass der Feinzeiger (30) nur gegen Ende des Dosiervorgangs wandert.

7. Dosierwaage nach Anspruch 6, dadurch gekennzeichnet, dass der Grobzeiger (28) einem Stundenzeiger ähnelt und der Feinzeiger (30) als nahe der Peripherie wandernder Teil eines Minutenzeigers ausgebildet ist.

8. Dosierwaage nach einem der Ansprüche 5, 6 oder 7, dadurch gekennzeichnet, dass der Anzeige (24) optische Markierungen (—, +) zur Kennzeichnung eines Toleranzbereichs zugeordnet sind.

## Claims

1. Method for optically displaying weights in dosing processes, wherein a set value is fed to a display control device (14 ... 20) and a non-numerical presentation of the weight is generated in a display (24) by means of display elements (28, 30) that are controlled as a function of weight and are associated with the periphery of a round area, characterized in that a travelling pointer similar to a clock hand serves as display element, and that during coarse dosing there is used a first rotational speed relative to the dosing rate, while during fine dosing a second, faster rotational speed is used.

2. Method for optically displaying weights in dosing processes, wherein a set value is fed to a display control device (14 ... 20) and a non-numerical presentation of the weight is generated in a display (24) by means of display elements (28, 30) that are controlled as a function of weight and are associated with the periphery of a round area, characterized in that two travelling pointers (28, 30) similar to clock hands serve as display elements, wherein one pointer (coarse pointer, 28) travels with a first rotational speed relative to the dosing rate, while the other pointer (fine pointer, 30) only travels towards the end of the dosing process, having a second rotational speed.

3. Method as in claim 2, characterized in that both pointers (28, 30) travel over a predetermined circular sector during a complete dosing process, irrespective of the set value.

4. Method as in claim 3, characterized in that both pointers (28, 30) start at the same position (0) and travel through a sector of even extension one after the other.

5. Dosing balance having a display (24) that comprises display elements (28, 30) associated with the periphery of a round area (26) for a non-numerical presentation of the weight, having a display control device (14 ... 20), and having a device (34) for feeding a set value to the display control device, characterized in that a travelling pointer similar to a clock hand serves as display element, and that circuitry (14 ... 20) is provided for generating two different rotational speeds, relative to the dosing rate, of the pointer during a complete dosing process.

6. Dosing balance having a display (24) that comprises display elements (28, 30) associated with the periphery of a round area (26) for a non-numerical presentation of the weight, having a display control device (14 ... 20), and having a device (34) for feeding a set value to the display control device, characterized in that two travelling pointers (28, 30) similar to clock hands serve as display elements, and that circuitry (14 ... 20) is provided that serves for generating a first rotational speed relative to the dosing rate for the first pointer (coarse pointer, 28) and a second rotational speed for the other pointer (fine pointer, 30), wherein the fine pointer (30) only travels towards the end of the dosing process.

7. Dosing balance as in claim 6, characterized in that the coarse pointer (28) resembles an hour hand and that the fine pointer (30) resembles part of a minute hand travelling along the periphery.

8. Dosing balance as in claim 5, 6 or 7, characterized in that there are optical marks (—, +) adjoined to the display (24) for marking a tolerance range.

**Revendications**

1. Procédé pour la représentation optique du poids dans des dosages, dans lequel une valeur prescrite est introduite dans une commande d'affichage (14 ... 20) et une représentation non numérique du poids est réalisée dans un afficheur (24) à l'aide d'éléments d'affichage (28, 30) commandés en fonction du poids, placés à la périphérie d'une surface ronde, caractérisé par le fait qu'un index mobile, analogue à une aiguille de montre, sert d'élément d'affichage, une première vitesse de rotation en rapport avec la vitesse du dosage étant utilisée pendant le dosage grossier, et une deuxième vitesse de rotation plus élevée étant utilisée pendant le dosage fin.

2. Procédé pour la représentation optique du poids dans des dosages, dans lequel une valeur prescrite est introduite dans une commande d'affichage (14 ... 20) et une représentation non numérique du poids est réalisée dans un afficheur (24) à l'aide d'éléments d'affichage (28, 30) commandés en fonction du poids, placés à la périphérie d'une surface ronde, caractérisé par le fait que deux index mobiles (28, 30), analogues à des aiguilles de montre, servent d'éléments d'affichage, l'un des index (index grossier) (28) se déplaçant avec une première vitesse de rotation en rapport avec la vitesse du dosage et l'autre (index fin) (30) ne se déplaçant que vers la fin du dosage et avec une deuxième vitesse de rotation.

3. Procédé selon la revendication 2, caractérisé par le fait que deux index (28, 30), indépendamment de la valeur prescrite, balaient, pour un dosage complet, chacun un secteur déterminé.

4. Procédé selon la revendication 3, caractérisé par le fait que les deux index (28, 30) partent de la même position (0) et parcourent l'un après l'autre respectivement un secteur de même grandeur.

5. Balance de dosage, possédant un afficheur (24) qui comporte des éléments d'affichage (28, 30) placés à la périphérie d'une surface ronde (26) pour la représentation non numérique du poids, une commande d'affichage (14 ... 20) et un dispositif (34) d'introduction d'une valeur prescrite dans la commande d'affichage, caractérisée par le fait qu'un index mobile analogue à une aiguille de montre sert d'élément d'affichage et qu'il est prévu un montage (14 ... 20) servant à produire pendant un dosage complet deux vitesses de rotation de l'index différentes en rapport avec la vitesse du dosage.

6. Balance de dosage, possédant un afficheur (24) qui comporte des éléments d'affichage (28, 30) placés à la périphérie d'une surface ronde (26) pour la représentation non numérique du poids, une commande d'affichage (14 ... 20) et un dispositif (34) d'introduction d'une valeur prescrite dans la commande d'affichage, caractérisée par le fait que deux index mobiles (28, 30), analogues à des aiguilles de montre, servent d'éléments d'affichage et qu'il est prévu un montage (14 ... 20) visant à produire une première vitesse de rotation en rapport avec la vitesse du dosage pour l'un des index (28) (index grossier) et une deuxième vitesse de rotation pour l'autre index (30) (index fin), de telle sorte que l'index fin (30) ne se déplace que vers la fin du dosage.

7. Balance de dosage selon la revendication 6, caractérisée par le fait que l'index grossier (28) ressemble à une aiguille des heures et que l'index fin (30) est formé comme la partie mobile, à proximité de la périphérie, d'une aiguille des minutes.

8. Balance de dosage selon l'une des revendications 5, 6 ou 7, caractérisée par le fait que pour matérialiser une zone de tolérance, on adjoint à l'afficheur (24) des repères optiques (—, +).

*Fig. 1*

*Fig. 6*